# EUROPÄISCHE PATENTSCHRIFT

(11) **EP 1 132 320 B1**
(45) Veröffentlichungstag und Bekanntmachung des Hinweises auf die Patenterteilung: **11.08.2004**
(21) Anmeldenummer: 01103470.9
(22) Anmeldetag: 14.02.2001
(51) Int. Cl.: B65G 19/02

(54) **Fördergutträger zum Transport von Fördergut in einer Hängefördereinrichtung**
Load carrier for conveyance of items in a overhead conveyor system
Porte-charges pour le transport d'articles dans un système de convoyeur aérien

(30) Priorität: 14.02.2000 DE 20002576 U
(43) Veröffentlichungstag der Anmeldung: 12.09.2001
(73) Patentinhaber: WF Logistik GmbH, 86899 Landsberg (DE)
(72) Erfinder: Lutsch, Wilhelm-Hermann, 86899 Landsberg am Lech (DE)
(74) Vertreter: Tiesmeyer, Johannes, Dr.

(56) Entgegenhaltungen:
- EP-A- 0 164 109
- DE-A- 2 344 533
- DE-A- 3 303 370
- US-A- 4 464 996
- US-A- 5 056 438

## Beschreibung

Die Erfindung betrifft einen Fördergutträger zum Transport von Fördergut in einer Hängefördereinrichtung, wobei der Fördergutträger wenigstens ein Laufwerk mit einem Laufrollenhalterungskörper und daran drehbar gelagerten Laufrollen aufweist, mit denen der Fördergutträger hängend an einer Laufschiene der Hängefördereinrichtung abstützbar und dabei längs der Laufschiene verfahrbar ist, wobei zur Ankopplung des Fördergutträgers an eine zumindest bereichsweise längs der Laufschiene bewegbare Antriebskette der Hängefördereinrichtung ein Kopplungselement mit einer Zahnung an dem Laufrollenhalterungskörper angeordnet ist.

Fördergutträger der vorstehend genannten Art werden auch als Fördertrolleys oder Trolleys bezeichnet und werden als Transportmittel für Fördergut in Hängefördereinrichtungen eingesetzt. Ein Fördergutträger mit den eingangs genannten Merkmalen ist beispielsweise aus der US 4 464 996 bekannt. Dieser bekannte Fördergutträger weist einen V-förmigen Bügel als Laufrollenhalterungskörper auf, wobei an den abstehenden freien Bügelschenkelenden zwei Laufrollen drehbar befestigt und symmetrisch in Bezug auf eine Mittenebene angeordnet sind, die zwischen den Bügelschenkeln verläuft. Die Laufrollen sind schräg zueinander orientiert. In der Transportstellung an der Laufschiene stützt sich der Fördergutträger mit seinen beiden Laufrollen an schräg zueinander orientierten oberen Laufflächen der Laufschiene ab, wobei die Bügelschenkel des Laufrollenhalterungskörpers die Laufschiene zwischen sich aufnehmen, so dass der die Bügelschenkel miteinander verbindende Basisbereich des Laufrollenhalterungskörpers unterhalb der Laufschiene liegt. Von diesem Basisbereich des Laufrollenhalterungskörpers stehen die Vorsprünge bzw. die Zähne der Zahnung des Kopplungselementes nach oben zur Laufschiene hin ab, so dass sie von einer an der Unterseite der Laufschiene geführten, in Längsrichtung der Laufschiene verlaufenden und zur Bewegung angetriebenen Förderkette in Eingriff genommen werden können, so dass der Fördergutträger von der Antriebskette bei deren Bewegung mitgeschleppt wird. Das Kopplungselement des aus der US 4 464 996 bekannten Fördergutträgers ist eine Platte, die in der Mittenebene zwischen den beiden Bügelschenkeln liegt und an einer oberen Schmalseite die Zahnung aufweist. Das Kopplungselement ist um eine quer zur normalen Fortbewegungsrichtung des Fördergutträgers verlaufende Schwenkachse in einem kleinen Winkelbereich schwenkbar, so dass sie begrenzt Ausgleichs-Schwenkbewegungen ausführen kann. Der Antrieb von Fördergutträgern in einer Hängefördereinrichtung mittels einer das Kopplungselement oder ggf. mehrere Kopplungselemente eines Fördergutträgers in Eingriff nehmenden Antriebskette ist insbesondere im Bereich von Steigungen bzw. Neigungen der Förderstrecke vorteilhaft. Fördergutträger der hier betrachteten Art werden in Bereichen mit horizontalem Streckenverlauf häufig auch mit anderen Antriebsmitteln, ggf. auch manuell, weiterbewegt.

Nähert sich nun ein solcher Fördergutträger einer Steigungsstrecke und wird er dabei an seinem Kopplungselement von einer Antriebskette in Eingriff genommen, so kann es bei den bisher bekannten Fördergutträgern bei der gegenseitigen Ineingriffnahme des Kopplungselementes und der Antriebskette zum Aufbau von Spannungen in dem Fördergutträger und in der Kette kommen, wenn im Moment des Zusammenführens der Zahnung des Kopplungselementes und der Antriebskette die Zähne des Kopplungselementes noch nicht exakt in "Phase" mit den komplementären Zwischenräumen der Antriebskette zusammentreffen, jedoch bereits eine gegenseitige Beaufschlagung des Kopplungselementes und der Antriebskette stattgefunden hat.

Normalerweise weisen Fördergutträger der hier betrachteten Art zwei im Wesentlichen gleiche Laufwerke auf, die an ihren unteren Enden gelenkig mit einer gemeinsamen Tragstange oder dergleichen verbunden sind, wobei die Tragstange dazu dient, das Fördergut zu halten. Solche Fördergutträger werden beispielsweise in der Bekleidungsindustrie eingesetzt, wobei an der Tragstange Kleiderbügel angehängt werden, an denen Kleidungsstücke hängen. Bei solchen Fördergutträgern mit Tragstange und zwei aufeinander folgenden Laufwerken konventioneller Bauart kann es beim Einlaufen in eine Steigungsstrecke zu unerwünschten Belastungszuständen und Spannungen innerhalb des Fördergutträgers kommen, wenn sich das vordere Laufwerk schon im Steigungsbereich befindet, während das hintere Laufwerk noch horizontal geführt ist, so dass die beiden Laufwerke eine Schrägstellung zueinander erfahren und der Abstand zwischen ihren oberen Enden kleiner ist als der Abstand zwischen ihren unteren Enden. Eine entsprechende Situation liegt vor beim Einfahren in eine Neigungsstrecke.

Eine technishe Lösung zum Abbau der Spannungen beim Einlaufen in eine Steigungsstrecke ist bereits in der Druckschrift EP-A-0-164 109 angegeben.

Der Erfindung liegt die Aufgabe zugrunde, einen Fördergutträger der eingangs genannten Art zu verbessern, um die vorstehend geschilderten Nachteile gattungsgemäßer Fördergutträger weitestgehend zu überwinden.

Zur Lösung dieser Aufgabe wird erfindungsgemäß vorgeschlagen, dass das Kopplungselement mittels einer federnd wirksamen Halterungsanordnung an dem Laufrollenhalterungskörper derart befestigt ist, dass es aus einer Normalstellung heraus gegen die Feder-Rückstellkraft der Halterungsanordnung über einen begrenzten Auslenkbereich am und relativ zum Laufrollenhalterungskörper - in Fortbewegungsrichtung des betreffenden Laufwerksverschiebbar auslenkbar ist.

Das Kopplungselement ist somit über einen begrenzten Weg relativ zum Laufrollenhalterungskörper mit vergleichsweise geringem Kraftaufwand verschiebbar, was einerseits die Ineingriffnahme der Zahnung des Kopplungselementes durch die Antriebskette in jeder "Phasenlage" der Zahnung relativ zur Antriebskette erleichtert und ferner bei Fördergutträgern mit zwei durch ein Traggestänge miteinander verbundenen, aufeinander folgenden Laufwerken einen selbsttätigen Abstandsausgleich schafft, wenn die Laufwerke beim Einlaufen in eine Steigungsstrecke oder Neigungsstrecke eine Schrägstellung zueinander erfahren und die laufrollenseitigen oberen Enden der Laufwerke einen anderen Abstand voneinander einnehmen als die durch das Traggestänge miteinander verbundenen unteren Enden.

Vorzugsweise ist der Laufrollenhalterungskörper als im Wesentlichen V-förmiger oder U-förmiger Bügel ausgebildet, der in bekannter Weise an den freien Enden seiner Bügelschenkel eine jeweilige Laufrolle aufweist, wobei das Kopplungselement in einer Mittenebene zwischen den Bügelschenkeln angeordnet und in dieser Mittenebene aus seiner Normalstellung heraus verschiebbar auslenkbar ist.

Wenngleich für einen zuverlässigen Betrieb nicht unbedingt erforderlich, so kann es vorgesehen sein, dass das Kopplungselement um eine quer zur normalen Laufrichtung des Fördergutträgers verlaufende Schwenkachse um einen begrenzten Schwenkwinkel schwenkbar - und unter Beibehaltung seiner Schwenkbarkeit aus seiner Normalstellung heraus verschiebbar - auslenkbar ist.

Gemäß einer bevorzugten Ausführungsform weist der Fördergutträger nach der Erfindung zwei durch ein Halterungsgestänge oder dergleichen für Fördergut miteinander verbundene Laufwerke auf, die jeweils ein relativ zum jeweiligen Laufrollenhalterungskörper verschiebbar auslenkbares Kopplungselement haben.

Die Erfindung wird nachstehend unter Bezugnahme auf die Figuren näher erläutert.
- Fig. 1: zeigt in einer teils geschnittenen und teils gebrochenen Ansicht ein Laufwerk eines Fördergutträgers nach der Erfindung an einer Laufschiene einer Hängefördereinrichtung, wobei das Laufwerk in einer Vorderansicht zu sehen ist.
- Fig. 2: zeigt in einer Seitenansicht einen Fördergutträger nach der Erfindung mit zwei durch eine Tragstange miteinander verbundenen Laufwerken der in Fig. 1 gezeigten Art, wobei eines der Laufwerke im Längsschnitt dargestellt ist.
- Fig. 3a, 3b und 3c: zeigen ein Laufwerk nach der Erfindung in einer Längsschnitt-Seitenansicht mit jeweils unterschiedlicher Auslenkung des Kopplungselementes relativ zum Laufrollenhalterungskörper.
- Fig. 4: zeigt zwei Fördergutträger nach der Erfindung in Seitenansicht an einer einen Steigungsstreckenabschnitt definierenden Laufschiene einer Hängefördereinrichtung.

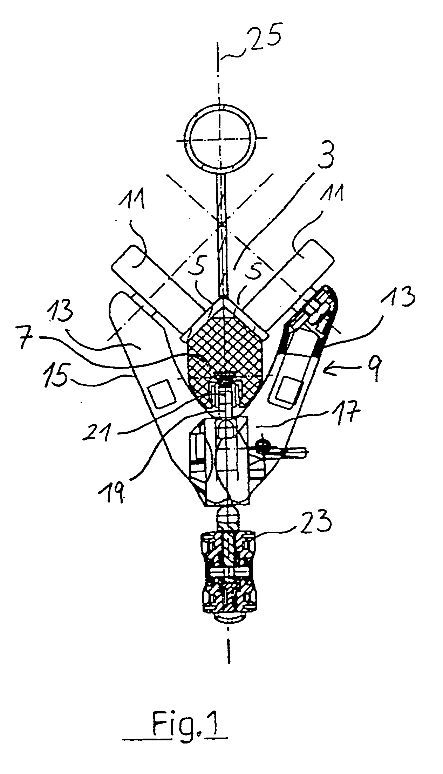

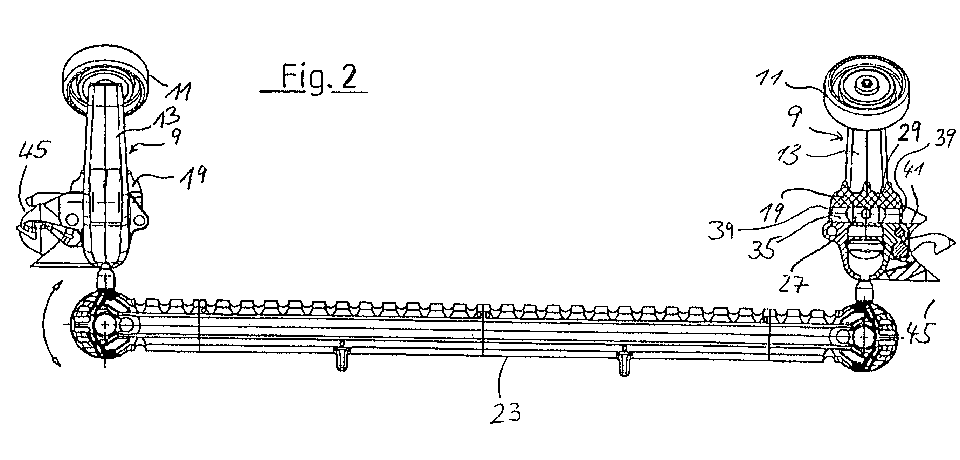

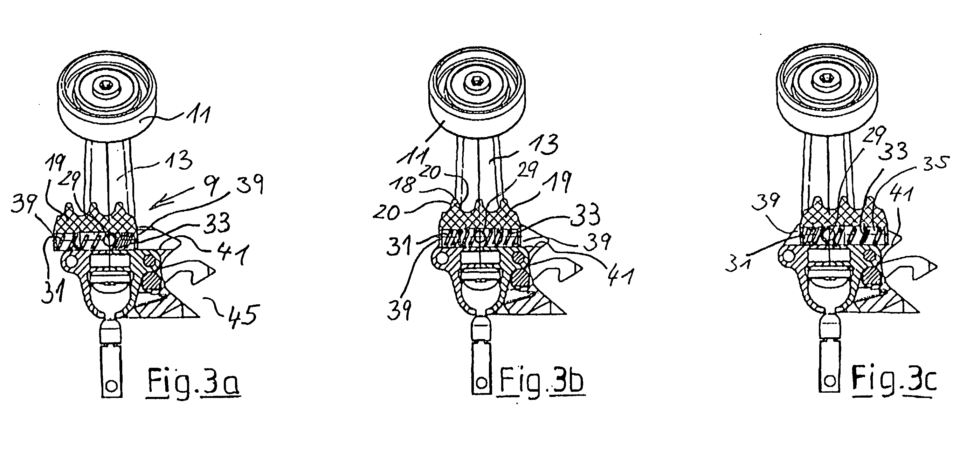

In Fig. 1 ist eine Laufschiene 3 in Querschnittsdarstellung erkennbar, die ein satteldachartiges Laufflächenprofil mit schräg zueinander orientierten oberen Führungsflächen 5 hat und ferner eine Kettenführungsanordnung 7 an ihrem unteren Ende aufweist. An den Laufschienenführungsflächen 5 stützt sich das Laufwerk 9 des Fördergutträgers mit Laufrollen 11 hängend ab. Die Laufrollen 11 sind entsprechend der Anordnung der Laufschienenführungsflächen 5 schräg zueinander orientiert, so dass sie an den Führungsflächen 5 in Laufschienenlängsrichtung abrollen können. Die Laufrollen 11 sind an den abstehenden freien Enden der Bügelsdhenkel 13 des V-förmigen Laufrollenhalterungskörpers 15 drehbar gelagert. In der gezeigten Transportanordnung nehmen die Bügelschenkel 13 den unteren Bereich der Laufschiene 3 mit der Kettenführungsanordnung 7 zwischen sich auf, so dass der die Bügelschenkel 13 miteinander verbindende Basisbereich 17 des Laufrollenhalterungskörpers 15 sich unterhalb der Laufschiene 3 befindet. Von dem Basisbereich 17 des Laufrollenhalterungskörpers 15 steht ein in den Figuren 2 und 3a - 3c detailliert in einer Längsschnittdarstellung erkennbares Kopplungselement 19 mit oben liegender Verzahnung nach oben hin ab. In der Anordnung gemäß Fig. 1 steht eine in der Kettenführungsanordnung 7 in Laufschienenlängsrichtung geführte Laschen-Antriebskette 21 mit der Verzahnung 19 in Eingriff. Die Antriebskette 21 ist eine umlaufend angetriebene Endloskette, die das Laufwerk 9 in der gezeigten Anordnung längs der Laufschiene 3 mitnimmt, um den betreffenden Fördergutträger zu transportieren.

In der Fig. 2 ist ein Ausführungsbeispiel eines Fördergutträgers nach der Erfindung mit zwei Laufwerken der in Fig. 1 gezeigten Art und mit einer die Laufwerke 9 an ihren unteren Enden miteinander verbindenden Tragstange 23 gezeigt. Die Laufwerke 9 sind gelenkig um quer zur Fortbewegungsrichtung des Fördergutträgers verlaufende Schwenkachsen mit der Tragstange 23 verbunden. Das in Fig. 2 rechts liegende Laufwerk 9 ist in einer Längsschnittdarstellung gezeigt. Eine entsprechende Darstellung des Laufwerks 9 - allerdings ohne Tragstange - zeigen die Fig. 3a, 3b und 3c. Das in den Fig. 2 und 3a - 3c deutlich erkennbare Kopplungselement 19 liegt in der in Fig. 1 bei 25 angedeuteten vertikalen Mittenebene des Laufrollenträgers 15. Diese Mittenebene entspricht der Schnittebene des Kopplungselementes 19 in den Figuren 3a - 3c. Das Kopplungselement 19 ist eine Platte, die an ihrer oberen Schmalseite eine Zahnung mit im Beispielsfall drei Zähnen aufweist. Die Geometrie und Anordnung der Zähne ist so gewählt, dass die aufeinander folgenden Zähne in aufeinander folgende Zwischenräume der Kette passend eingreifen können. Im Beispielsfall sind die Zähne an ihren Kuppen abgerundet bzw. weisen von einem Scheitel 18 schräg nach unten verlaufende vordere und hintere Randflächen 20 auf. Dies erleichtert die gegenseitige Ineingriffnahme des Kopplungselementes 19 und der Antriebskette 21 und insbesondere das durch Beaufschlagung durch die Kette herbeizuführende Ausrichten des Kopplungselementes 19 durch Verschieben relativ zur Kette 21.

Das plattenförmige Kopplungselement 19 weist ein zentrales Langloch 27 auf (vgl. Fig. 2), dessen Längserstreckung mit der Vorwärts/Rückwärtsrichtung des Laufrollenhalterungskörpers 15 korrespondiert. Durch das Langloch 27 erstreckt sich ein Halterungsstift 29 quer zur Vorwärts/Rückwärtsrichtung des Laufrollenhalterungskörpers 15, wobei der Halterungsstift 29 an dem Laufrollenhalterungskörper 15 verankert ist. Wie aus den Fig. 3a - 3c erkennbar ist, kann das Kopplungselement 19 relativ zu dem Laufrollenhalterungskörper 15 in dessen Vorwärts/Rückwärtsrichtung verschoben werden. In Fig. 3b ist die Normalstellung des Kopplungselementes 19 dargestellt, in der der Halterungsstift 29 zentral in dem Langloch 27 liegt. Die Fig. 3a und 3c zeigen einander entgegengesetzte Anschlagstellungen des Kopplungselementes 19 relativ zu dem Laufrollenhalterungselement 15. In der Anschlagstellung gemäß Fig. 3a liegt der rechte Rand des Langlochs 27 am Halterungsstift 29 an, wohingegen in Fig. 3c der linke Rand des Langlochs 27 an dem Halterungsstift 29 anliegt. Damit das Kopplungselement 19 im unbeaufschlagten Zustand die Normalstellung gemäß Fig. 3b einnimmt bzw. beibehält, ist ein Federmechanismus vorgesehen, der im Beispielsfall zwei Schraubenfedern 31 und 33 umfasst, die sich in einem länglichen Hohlraum 35 befinden, welcher das Langloch 27 schneidet (vgl. Fig. 2) und sich in Vorwärts/Rückwärtsrichtung des Laufrollenhalterungskörpers 15 erstreckt. Die in Fig. 2 der Übersichtlichkeit halber nicht eingezeichneten Federn 31, 33 stützen sich mit ihren einander zugewandten Enden an entgegengesetzten Seiten des Halterungsstiftes 29 ab, wohingegen die anderen Federenden an den axial endseitigen Verschlusswänden 39 des Hohlraums 35 abgestützt sind. Es können relativ weiche Federn, d.h. Federn mit kleiner Federkonstante, verwendet werden. Bei dem gezeigten Ausführungsbeispiel kann das Kopplungselement 19 zwischen den beiden Extremstellungen gemäß Fig. 3a und Fig. 3c relativ zu dem Laufrollenhalterungskörper 15 translatorisch bzw. linear verschoben werden, wobei es auf einer Gleitfläche 41 des Laufrollenhalterungskörpers 15 gleiten kann. Die Gleitfläche 41 begrenzt mit einander gegenüberliegenden Seitenflächen an dem Laufrollenhalterungskörper 15 ein Linearlager, in dem das Kopplungselement 19 geführt zwischen zwei Ansschlagstellungen verschiebbar und gegen Herausfallen gesichert ist.

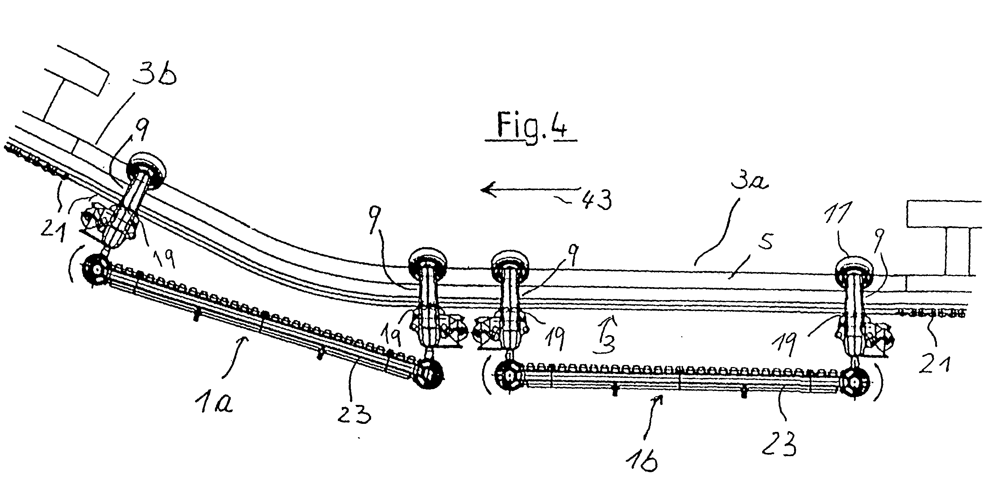

Das gegen die Federrückstellkraft der Federn 31 bzw. 33 aus seiner Normalstellung gemäß Fig. 3b verschiebbare Kopplungselement 19 findet bei Ankopplung an die Antriebskette 21 der Hängefördereinrichtung schnell die korrekte Phasenlage relativ zur Antriebskette, da es mit geringem Kraftaufwand relativ zum Laufrollenhalterungskörper verschiebbar ist, wenn die Antriebskette 21 an die Zahnung 20 angreift. Weiterhin ist durch die Verschiebbarkeit des Kopplungselementes 19 relativ zum Laufrollenhalterungskörper 15 eine Längenausgleichsmöglichkeit gegeben, die insbesondere bei der nachstehend unter Bezugnahme auf Fig. 4 geschilderten Situation vorteilhaft ist.

Fig. 4 zeigt zwei aufeinander folgend in Richtung des Pfeiles 43 bewegte, gleichartige Fördergutträger 1a und 1b an einer Laufschiene 3, die von einem horizontalen Laufschienenabschnitt 3a in einen Steigungsabschnitt 3b übergeht. Der Fördergutträger 1b befindet sich vollständig in dem horizontalen Laufschienenabschnitt 3a, wobei die Kopplungselemente 19 der beiden Laufwerke 9 von der in Fig. 4 angedeuteten Antriebskette 21 in gewünschter Weise in Eingriff genommen worden sind. Auch der Fördergutträger 1a steht über die beiden Kopplungselemente 19 seiner Laufwerke 9 mit der Antriebskette 21 in Eingriff. Bei dem Fördergutträger 1a ist das vordere Laufwerk 9 jedoch bereits im Anstiegsbereich 3b, während sich das hintere Laufwerk 9 noch auf dem horizontalen Laufschienenabschnitt 3a befindet. Dies bedingt, dass die laufrollenseitigen oberen Enden der beiden Laufwerke 9 des Fördergutträgers 1a einen geringeren Abstand zueinander aufweisen als die unteren Laufwerksenden, deren Abstand durch die Länge des Traggestänges 23 zwangsweise festgelegt ist. Im Bereich der Eingriffsstellen zwischen Kette 21 und Kopplungselementen 19 äußert sich dieser geometrische Versatz der Laufwerke 9 in Form von Kräften auf die Kopplungselemente 19.

Aufgrund der elastisch nachgiebigen Verschiebbarkeit der Kopplungselemente 19 relativ zum Laufrollenhalterungskörper 15 kann jedoch ein Längenausgleich selbsttätig erfolgen, so dass nicht die aus dem Stand der Technik bekannten irregulären Spannungen im Fördergutträger 1a entstehen. Der Fördergutträger 1a kann somit den "Knick" gemäß Fig. 4 mit einem sich selbsttätig anpassendem Abstandsausgleich zwischen den Kopplungselementen 19 passieren. Wie das Ausführungsbeispiel erkennen lässt, wird dies mit sehr einfachen Mitteln zur Realisierung der Längsverschiebbarkeit der Kopplungselemente 19 relativ zum jeweiligen Laufrollenhalterungskörper 15 erreicht.

Gemäß einer Variante des vorstehend beschriebenen Ausführungsbeispiels könnte zusätzlich zu der translatorischen Verschiebbarkeit des Kopplungselementes 19 eine Verschwenkbarkeit des Kopplungselementes 19 in einem begrenzten Winkelbereich relativ zu dem Laufrollenhafterungskörper 15 vorgesehen sein.

Bei 45 sind in den Figuren Einzelheiten von Elementen einer Anordnung zur Kupplung aufeinander folgender Fördergutträger gezeigt. Da diese Kupplungsanordnung nicht unmittelbarer Gegenstand der Erfindung ist, wird hierauf nicht näher eingegangen.

Es sei noch darauf hingewiesen, dass anstelle der in den Fig. 3a - 3c gezeigten Schraubenfedern 31, 33 andere elastisch wirksame Elemente vorgesehen sein können. Ferner stehen dem Fachmann im Rahmen seines allgemeinen Fachwissens diverse Varianten der Lagerung und Führung des Kopplungselementes 19 relativ zum Laufrollenhalterungskörper 15 zur Verfügung, ohne den Erfindungsgedanken zu verlassen.

## Patentansprüche

1. Fördergutträger zum Transport von Fördergut in einer Hängefördereinrichtung, wobei der Fördergutträger (1) wenigstens ein Laufwerk (9) mit einem Laufrollenhalterungskörper (15) und daran drehbar gelagerten Laufrollen (11) aufweist, mit denen der Fördergutträger (1) hängend an einer Laufschiene (3) der Hängefördereinrichtung abstützbar und dabei längs der Laufschiene (3) verfahrbar ist, wobei zur Ankopplung des Fördergutträgers (1) an eine zumindest bereichsweise längs der Laufschiene (3) bewegbare Antriebskette (21) der Hängefördereinrichtung ein Kopplungselement (19) mit einer Zahnung an dem Laufrollenhalterungskörper (15) angeordnet ist,
**dadurch gekennzeichnet,**
**dass** das Kopplungselement (19) mittels einer federnd wirksamen Halterungsanordnung (27, 29, 31, 33, 39) an dem Laufrollenhalterungskörper (15) derart befestigt ist, dass es aus einer Normalstellung (Fig. 3b) heraus gegen die Feder-Rückstellkraft der Halterungsanordnung (27, 29, 31, 33, 39) über einen begrenzten Auslenkbereich am und relativ zum Laufrollenhalterungskörper (15) in Fortbewegungsrichtung des Laufwerks verschiebbar auslenkbar ist.

2. Fördergutträger nach Anspruch 1, **dadurch gekennzeichnet, dass** der Laufrollenhalterungskörper (15) als im Wesentlichen V-förmiger oder U-förmiger Bügel ausgebildet ist, der an den freien Enden seiner Bügelschenkel (13) eine jeweilige Laufrolle (11) aufweist, wobei das Kopplungselement (19) in einer Mittenebene (25) zwischen den Bügelschenkeln (13) angeordnet und in dieser Mittenebene (25) aus seiner Normalstellung heraus verschiebbar auslenkbar ist.

3. Fördergutträger nach Anspruch 1 oder 2, **dadurch gekennzeichnet, dass** das Kopplungselement um eine quer zur normalen Laufrichtung des Fördergutträgers verlaufende Schwenkachse um einen begrenzten Schwenkwinkel schwenkbar und - unter Beibehaltung seiner Verschwenkbarkeit aus seiner Normalstellung heraus - verschiebbar auslenkbar ist.

4. Fördergutträger nach Anspruch 2 oder 3, **dadurch gekennzeichnet, dass** er zwei durch ein Halterungsgestänge (23) für Fördergut miteinander verbundene Laufwerke (9) mit einem relativ zum jeweiligen Laufrollenhalterungskörper (15) verschiebbar auslenkbaren Kopplungselement (19) aufweist.

## Claims

1. Conveyable-article. carrier for transporting conveyable articles in a suspension-type conveying arrangement, it being the case that the conveyable-article carrier (1) has at least one running-gear mechanism (9) with a running-roller-securing body (15) and running rollers (11) which are mounted in a rotatable manner thereon and by means of which the conveyable-article carrier (1) can be supported in a suspended manner on a running rail (3) of the suspension-type conveying arrangement and can be displaced along the running rail (3), and that a coupling element (19) with a toothing formation is arranged on the running-roller-securing body (15) in order for the conveyable-article carrier (1) to be coupled to a drive chain (21) which belongs to the suspension-type conveying arrangement and can be moved, at least in certain regions, along the running rail (3), **characterized in that** the coupling element (19) is fastened on the running-roller-securing body (15) by means of a resiliently active securing arrangement (27, 29, 31, 33, 39) such that it can be deflected in a displaceable manner out of a normal position (Figure 3b), counter to the spring-restoring force of the securing arrangement (27, 29, 31, 33, 39), over a limited deflecting region on, and relative to, the running-roller-securing body (15) in the advancement direction of the running-gear mechanism.

2. Conveyable-article carrier according to Claim 1, **characterized in that** the running-roller-securing body (15) is designed as an essentially V-shaped or U-shaped bracket which has a respective running roller (11) at 5the free ends of its bracket legs (13), it being the case that the coupling element (19) is arranged in a centre plane (25) between the bracket legs (13) and, in this centre plane (25), can be deflected in a displaceable manner out of its normal position.

3. Conveyable-article carrier according to Claim 1 or 2, **characterized in that** the coupling element can be pivoted through a limited pivoting angle, about a pivot axis running transversely to the normal running direction of the conveyable-article carrier, and - while maintaining its ability to pivot out of its normal position - can be deflected in a displaceable manner.

4. Conveyable-article carrier according to Claim 2 or 3, **characterized in that** it has two running-gear mechanisms (9) which are connected to one another by a securing linkage (23) for conveyable articles and has a coupling element (19) which can be deflected in a displaceable manner relative to the respective running-roller-securing body (15).

## Revendications

1. Porte-charge pour le transport d'articles dans un système de convoyeur aérien, le porte-charge (1) comprenant au moins un train de roulement (9) avec un élément de fixation des galets (15) et des galets (11) qui y sont montés tournants, par lesquels le porte-charge (1) peut être suspendu à un rail (3) du système de convoyeur aérien et rendu mobile le long du rail (3), et dans lequel, pour l'accouplement du porte-charge (1) avec une chaîne d'entraînement (21) du système de convoyeur aérien, mobile au moins sur une zone le long du rail (3), un élément d'accouplement (19) avec une denture est disposé sur l'élément de fixation des galets (15), **caractérisé en ce que** l'élément d'accouplement (19) est fixé à l'aide d'un dispositif de fixation élastique (27, 29, 31, 33, 39) à l'élément de fixation des galets (15) de telle sorte qu'il puisse être dévié de manière coulissante, à partir d'une position normale (figure 3b), contre la force de rappel d'un ressort du dispositif de fixation (27, 29, 31, 33, 39), sur une zone de déviation limitée sur et par rapport à l'élément de fixation des galets (15), dans la direction du déplacement du train de roulement.

2. Porte-charge selon la revendication 1, **caractérisé en ce que** l'élément de fixation des galets (15) est conformé comme un étrier en forme de V ou en forme de U, qui comprend, au niveau des extrémités libres de ses ailes (13), un galet de roulement (11), l'élément d'accouplement (19) étant disposé dans un plan médian (25) entre les ailes de l'étrier (13) et pouvant être dévié de manière coulissante dans ce plan médian (25) à partir de sa position normale.

3. Porte-charge selon la revendication 1 ou 2, **caractérisé en ce que** l'élément d'accouplement peut pivoter, sur un angle de pivotement limité, autour d'un axe de pivotement perpendiculaire à la direction normale de déplacement du porte-charge et, en conservant sa possibilité de pivotement à partir de sa position normale, peut être dévié de manière coulissante.

4. Porte-charge selon la revendication 2 ou 3, **caractérisé en ce qu'**il comprend deux trains de roulement (9) reliés entre eux par une tringlerie de fixation (23) pour l'article à transporter, avec un élément d'accouplement (19) pouvant être dévié de manière coulissante par rapport à chaque élément de fixation des galets (15).
